Europäisches Patentamt

European Patent Office

Office européen des brevets

(19)

(11) Veröffentlichungsnummer: **0 192 107**
**B1**

(12) **EUROPÄISCHE PATENTSCHRIFT**

(45) Veröffentlichungstag der Patentschrift: **02.01.91**

(21) Anmeldenummer: **86101328.2**

(22) Anmeldetag: **01.02.86**

(51) Int. Cl.⁵: **H 04 M 3/62,** H 04 M 3/58, H 04 M 9/00

(54) Bedienungs-oder Abfrageplatz für eine Fernsprechvermittlungsanlage, insbesondere Makler-Vielfachanlage.

(30) Priorität: **20.02.85 DE 3505779**

(43) Veröffentlichungstag der Anmeldung:
**27.08.86 Patentblatt 86/35**

(45) Bekanntmachung des Hinweises auf die
Patenterteilung:
**02.01.91 Patentblatt 91/01**

(84) Benannte Vertragsstaaten:
**AT BE IT**

(56) Entgegenhaltungen:
**US-A-4 107 477**

**ERICSSON REVIEW, Band 57, Nr. 4, 1980, Seiten 160-165, Stockholm, SE; K.-G. CARLSSON et al.: "A telephone system for foreign exchange trading"**

(73) Patentinhaber: **TELENORMA Telefonbau und Normalzeit GmbH**
**Mainzer Landstrasse 128-146**
**D-6000 Frankfurt am Main (DE)**

(72) Erfinder: **Hutt, Hans**
**Poppstrasse 5**
**D-7336 Uhingen (DE)**

(56) References cited:
**BRITISH TELECOMMUNICATIONS ENGINEERING, Band 2, Oktober 1983, Seiten 174-178, London, GB; D.J. FRENCH: "London telecommunications - the city business system"**
**TN-NACHRICHTEN, Nr. 73, 1972, Seiten 20-22, Dreieich, DE; H. TRON: "Die TN-MAKLERANLAGE - ein Fernsprechsystem für schnellen und direkten Kontakt zum Gesprächspartner"**

EP 0 192 107 B1

## Beschreibung

Die Erfindung betrifft einen Bedienungs-oder Abfrageplatz für eine Fernsprechvermittlungsanlage, insbesondere Makler-Vielfachanlage, wie dies im Oberbegriff des Patentanspruches 1 näher erläutert ist.

Bei Makleranlagen kommt es darauf an, von mehreren Arbeitsplätzen aus direkten Zugriff zu vielen Leitungen zu haben, worüber Verbinungen schnell aufgebaut und auch gehalten werden können, so daß zwischen den Gesprächen beliebig oft gewechselt werden kann, ohne daß Verbindungen immer wieder neu aufgebaut werden müssen. Die Funktionsmerkmale einer Makleranlage sind beschrieben in den TN-Nachrichten 1972, Heft 73, von Seite 20 bis Seite 22. Dort ist erwähnt, daß an jedem Abfrageplatz gleichzeitig mehrere ankommende und abgehende Verbindungen entsehen können, zwischen denen beliebig oft gewechselt, d.h. gemakelt werden kann. Solange auf einer Leitung gesprochen wird, sind alle anderen Verbindungen in Haltestellung geschaltet. Dabie können die wartenden Teilnehmer das Gespräch nicht mithören. In manchen Anwendungsfällen ist es jedoch wünschenswert, daß vom Arbeitsplatz einer Makleranlage aus mit mehr als einem Fernsprechteilnehmer gleichzeitig gesprochen werden kann. Dazu sind dann mindestens zwei Fernsprech-Handapparate erforderlich. Unabhängig von den Bedienungs-oder Abfrageplätzen einer Makleranlage ist es selbstverständlich auch möglich, beispielsweise am Arbeitsplatz eines Börsenmaklers eine Viezahl von Fernsprechapparaten unterzubrigen. Dazu wird jedoch eine relativ große Stellfläche beansprucht und der Arbeitsplatz ist sehr unübersichtlich. Bei einzelnen Fernsprechapparaten tritt außerdem der Nachteil auf, daß die Bedienungsweise gegenüber einem Bedienungs-oder Abfrageplatz wesentlich unbe quemer ist. Bei der Verwendung von normalen Fernsprechapparaten für diesen Zweck tritt aufßerdem der Nachteil auf, daß Gespräche mitgehört werden können, wenn zum Halten einer Verbindung der Handapparat auf den Tisch gelegt wird.

Die Aufgabe der Erfindung besteht darin, die Vorteile eines Bedienungs-oder Abfrageplatzes bei einer als Makler-Vielfachanlage konzipierten Fernsprechvermittlungsanlage auch dann zu nutzen, wenn zwischen mehreren Leitungen gemakelt werden soll, wobei mit mehr als einem Gesprächspartner gleichzeitig gesprochen werden kann. Diese Aufgabe wird durch eine Merkmalskombination gelöst, wie sie im Patentanspruch 1 angegeben ist. Weiterbildungen der Erfindung ergeben sich aus den Unteransprüchen.

Damit wird in vorteilhafter Weise erreicht, daß mit einer sehr einfachen Bedienungsweise jede von einem Bedienungs- oder Abfrageplatz einer Makler-Vielfachanlage aufgebaute Verbindung so auf einen zweiten Anschluß umgesteuert werden kann, daß sie jederzeit gezielt wieder in den Gesprächszustand versetzt werden kann. Es ist somit möglich, neben der mit einem ersten Anschlußorgan Bestehenden Gesprächsverbindung eine von mehreren auf das zweite Anschlußorgan geschalteten Gesprächsverbindungen gleichzeitig aufrechtzuerhalten.

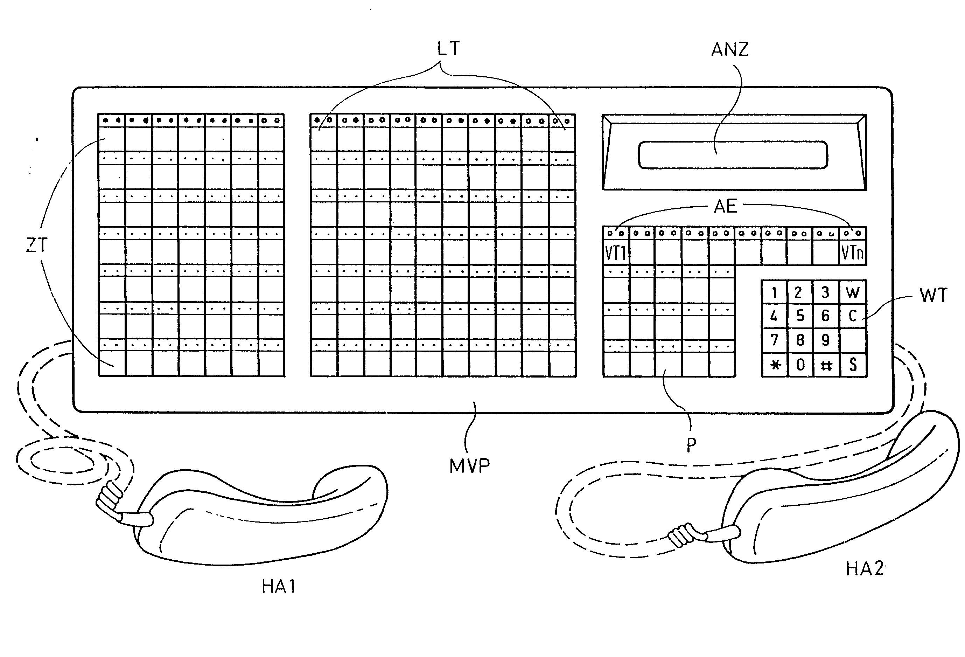

Ein Ausführungsbeispiel der Erfindung wird nachfolgend anhand einer Zeichnung näher erläutert. In der Zeichnung ist schematisch das Bedienungsfeld eines Makler-Vielfachplatzes MVP dargestellt. Auf der linken Seite befindet sich eine Anzahl von Zieltasten ZT, mit denen in bekannter Weise mit einem einzigen Tastendruck Verbindungen aufbaubar sind, nachdem durch Betätigen einer Leitungstaste LT eine Leitung belegt wurde. Selbstverständlich ist es auch möglich, jede gewünschte Verbindung mit Hilfe der Wähltastatur WT aufzubauen, wenn dafür keine Zeiltaste ZT zur Verfügung steht. Die Gesprächsverbindung ist dann auf den ersten Handapparat HA1 geschaltet. Jede einzelne der auf diese Weise aufgebauten Gesprächsverbindungen kann nun auf folgende Weise auf das zweite Anschlußorgan und damit auf den zweiten Handapparat Durch Betätigen einer Programmtaste P wird die über das erste Anschlußorgan aufgebaute Verbindung vorübergehend in einen Haltezustand gebracht. Sodann wird eine der Vorzugstasten VT1 bis VTn betätigt, wodurch diese Verbindung aus dem vorübergehenden Haltezustand heraus wieder in den Gesprächszustand versetzt wird. Das Gespräch kann also über das zweite Anschlußorgan und den zweiten Handapparat HA2 fortgesetzt werden. Während dieser bestehenden Gesprächsverbindung ist es ohne weiteres möglich, eine weitere Gesprächsverbindung wie vorher beschrieben, über das erste Anschlußorgan und den ersten Handapparat HA1 aufzubauen. Auch diese Verbindung kann mit den gleichen Bedienungshandgriffen, aber durch Betätigen einer anderen Vorzugstaste VT auf das zweite Anschlußorgan und den zweiten Handapparat HA2 umgeschaltet werden, wobei die zuvor auf diesem Anschlußorgan bestehende Gesprächsverbindung in einen Haltezustand gerät. Auf diese Weise ist es möglich, daß während des Bestehens einer Verbindung über das erste Anschlußorgan und den ersten Handapparat HA1 aus einer durch die Anzahl der Vorzugstasten VT vorgegebenen Maximalmenge von auf das zweite Anschlußorgan umgeschalteten Verbindungen jeweils eine gezielt in den Gesprächszustand versetzt werden kann, während die übrigen sich im Haltezustand befinden.

Durch Anzeigeelemente AE, die jeweils einer Vorzugstaste VT zugeordnet sind, wird angezeigt, auf welcher Position sich Verbindungen im Haltezustand befinden und mit welcher Position der Gesprächszustand über das zweite Anschlußorgan und den zweiten Handapparat HA2 besteht. Parallel dazu kann in einem Anzeigefeld ANZ der jeweilige Verbindungszustand und die Anschlußdaten der im Gesprächszustand befindlichen Verbindungen angezeigt werden.

## Patentansprüche

1. Bedienungs-oder Abfrageplatz für eine Fernsprechvermittlungsanlage, insbesondere Makler-Vielfachanlage mit zwei Anschlußorganen, wovon eines zum Aufbau von Verbindungen dient und über das andere zusätzlich eine weitere Verbindung aufrecht erhalten werden kann, wobei jedem Anschlußorgan ein eigener Handapparat zugeordnet ist, so daß auch Gespräche gleichzeitig über beide Anschlußorgane möglich sind, dadurch gekennzeichnet, daß mehrere Vorzugstasten (VT) vorgesehen sind, die alle dem zweiten Anschlußorgan und dem damit verbundenen zweiten Handapparat (HA2) zugeordnet sind, daß durch Betätigen einer einen Umsteuervorgang bewirkenden Programmtaste (P) und durch das nachfolgende Betätigen einer Vorzugstaste (VT) jeweils eine über das mit dem ersten Handapparat (HA1) verbundene Anschlußorgan aufgebaute Verbindung zum zweiten Anschlußorgan und damit zum zweiten Handapparat (HA2) umgeschaltet wird, und daß mehrere Verbindungen nacheinander auf die gleiche Weise zum zweiten Anschlußorgan umschaltbar sind, wobei jeweils diejenige Verbindung zum zweiten Handapparat (HA2) durchgeschaltet wird, bei der die betreffende Vorzugstaste (VT) zuletzt betätigt wurde, und die jeweils vorherige Verbindung in eine Warteschaltung gebracht wird.

2. Abfrageplatz nach Anspruch 1, dadurch gekennzeichnet, daß die einzelnen Verbindungen jeweils gezielt durch Batätigen der betreffenden Vorzugstaste (VT) aus der Warteschaltung herausgeholt und auf den zweiten Handapparat (HA2) geschaltet werden können.

3. Abfrageplatz nach Anspruch 1, dadurch gekennzeichnet, daß den Vorzugstasten (VT) jeweils individuell Anzeigeelemente (AE) zugeordnet sind, die den jeweiligen Zustand einer Verbindung anzeigen.

## Revendications

1. Position de traitement d'appel ou de renseignement pour un central téléphonique, en particulier un central à plusieurs positions pour courtiers ou opératrices, possédant deux organes de reccordement, dont l'un sert à l'établissement de connexions et, par l'intermédiaire de l'autre organe, permet en outre de manitenir une connexion supplémentaire, dans laquelle un combiné est spécifiquement relié à chaque organe de raccordement, de manière que des conversations soient possibles simultanément au moyen des deux organes de raccordement, caractérisée en ce que plusieurs touches de sélection (VT) sont prévues, toutes étant reliées au deuxière organe de raccordement et au deuxième combiné (HA2) qui lui est relié, en ce que l'on transfère une connexion établie par l'intermédiaire de l'organe de raccordement relié au premier combiné (HA1) sur le deuxième organe de raccordement et de ce fait, sur le deuxième combiné, en actionnant une touche de programmation (P) déclenchant un processus de transfert et en actionnant ensuite une touche de sélection (VT), et en ce que plusieurs connexions sont transférables de manière similaire sur le deuxième organe de raccordement, la connexion qui se trouve transférée sur le deuxième combiné (HA2) étant chaque fois celle pour laquelle la touche de sélection (VT) correspondante a été actionnée en dernier lieu, et la connexion précédente étant chaque fois placée dans un circuit d'attente.

2. Position de renseignement selon la revendication 1, caractérisée en ce que les différentes connexions peuvent être rappelées du circuit d'attente et être connectées au deuxième combiné (HA2) en actionnant la touche de sélection (VT) correspondante.

3. Position de renseignement selon la revendication 1, caractérisée en ce que des éléments d'affichage individuels (AE) sont associés à chacune des touches de sélection (VT), lesquels éléments d'affichage indiquent chaque fois l'état d'une connexion.

## Claims

1. Operating or answering position for a telephone exchange, in particular multiple plant for brokers with two connection organs, of which one serves for the setting-up of connections and a further connection can be maintained in addition by way of the other, wherein an individual handset is associated with each connection organ so that the conversations are also possible simultaneously by way of both connection organs, characterised thereby, that several preference keys (VT) are provided, which are all associated with the second connection organ and the second handset (HA2) connected therewith, that one connection at a time set up by way of the connection organ connected with the first handset (HA1) is switched over to the second connection organ and thereby to the second handset (HA2) through actuation of a program key (P) effecting a redirection process and through the subsequent actuation of a preference key (VT), and that several connections are switchable one after the other in the same manner to the second connection organ, wherein always that connection is switched through to the second handset (HA2), for which the preference key (VT) concerned was actuated last, and the respective previous connection is brought into a waiting circuit.

2. Answering position according to claim 1, characterised thereby, that the individual connections can each be fetched specifically out of the waiting circuit and switched to the second handset (HA2) through actuation of the preference key (VT) concerned.

3. Answering position according to claim 1, characterised thereby, that individual indicating elements (AE), which indicate the respective state of a connection, are associated with respective preference keys (VT).